# EUROPEAN PATENT SPECIFICATION

(11) **EP 1 013 671 B1**
(45) Date of publication and mention of the grant of the patent: **28.11.2001**
(21) Application number: 98124056.7
(22) Date of filing: 17.12.1998
(51) Int. Cl.: C08F 8/00, C08F 212/08

(54) **Functionalized syndiotactic styrene/para-alkylstyrene copolymer**
Funktionalisiertes syndiotaktisches Styrol/para-Alkylstyrol Copolymer
Copolymére fonctionnalisé syndiotactique de styréne et para-alkylstyréne

(43) Date of publication of application: 28.06.2000
(73) Proprietor: INDUSTRIAL TECHNOLOGY RESEARCH INSTITUTE, Chutung, Hsinchu 31015 (TW)
(72) Inventor: Tsai, Jing-Cherng, Hsinchu,TW, R.O.C. (TW); Li, Chi-Lan, Hsinchu,TW, R.O.C. (TW); Chao, Wee-Pin, Hsinchu,TW, R.O.C. (TW); Wang, Bor-Ping, Hsinchu,TW, R.O.C. (TW); Chen, Joung-Yei, Hsinchu, TW, R.O.C. (TW); Chen, In-Mau, Hsinchu, TW,R.O.C. (TW); Chou, Huai-Mei, Hsinchu, TW, R.O.C. (TW)
(74) Representative: Grosse, Wolfgang, Dipl.-Ing.

(56) References cited:
- WO-A-96/31578
- US-A- 5 189 125
- US-A- 5 252 693
- US-A- 5 548 029

## Description

### BACKGROUND OF THE INVENTION

### 1. Field of the Invention:

The present invention relates to functionalized syndiotactic styrene/para-alkylstyrene copolymers.

### 2. Description of the Prior Art:

Syndiotactic polystyrene (sPS) is very useful in many commercial applications. However, it suffers a major deficiency: poor adhesion to other materials, for example, to the copper of PC boards. In addition, sPS has poor compatability with other functional polymers. Therefore, there is a need to improve the physical properties of the conventional syndiotactic polystyrene.

Chung et al. in U.S. Patent No. 5,543,484 have disclosed functionalized α-olefin/para-alkylstyrene copolymers. First, α-olefin and para-alkylstyrene are copolymerized. The incorporation of p-alkylstyrene into the α-olefin polymer results in the generation of benzylic protons, which are readily available for many chemical reactions, thereby introducing functional groups at benzylic position under mild reaction conditions. Then, the olefin/p-alkylstyrene copolymer is functionalized by the functionalization of benzylic protons in p-alkylstyrene units. Such functionalization leads to improvement in the physical properties of the original olefin polymers.

Powers et al. in U.S. Patent No. 5,548,029 has disclosed graft copolymers of para-alkylstyrene/isoolefin. In a similar manner, isoolefin and para-alkylstyrene are copolymerized, and then the p-alkylstyrene/isoolefin copolymer is functionalized by the functionalization of benzylic protons in p-alkylstyrene units. By such functionalization, the physical properties of the isoolefin polymer can be improved.

To date, no one has ever provided a functionalized syndiotactic styrene/para-alkylstyrene copolymer.

### SUMMARY OF THE INVENTION

The object of the present invention is to solve the above-mentioned problems and to provide a functionalized syndiotactic styrene/para-alkylstyrene copolymer. In comparison with the unfunctionalized syndiotactic styrene polymer, the functionalized syndiotactic styrene/p-alkylstyrene copolymer of the present invention has a better adhesion to many substrates and a better compatibility with other polymers.

To achieve the above-mentioned object, the functionalized syndiotactic styrene/para-alkylstyrene copolymer of the present invention has the formula of 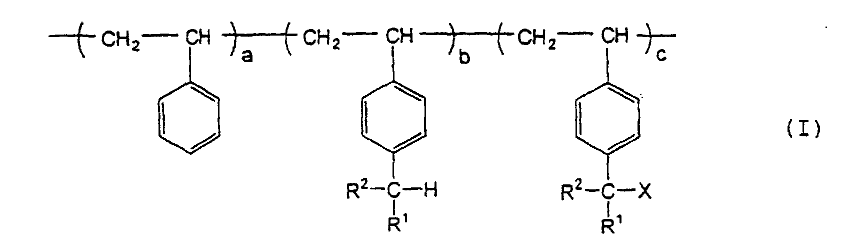 wherein
R¹ and R² are independently selected from the group consisting of hydrogen, alkyl, primary and secondary haloalkyl,
X is a functional group selected from a group containing halogen, oxygen, sulfur, silicon, nitrogen, carbon, phosphorus, and mixtures thereof,
a ranges from 10 to 30000,
b ranges from 0 to 30000, and
c ranges from 1 to 30000.

### DETAILED DESCRIPTION OF THE INVENTION

The present invention is the first time a syndiotactic styrene/para-alkylstyrene copolymer has been functionalized successfully.

The functionalized syndiotactic styrene/para-alkylstyrene copolymer of the present invention has the formula of 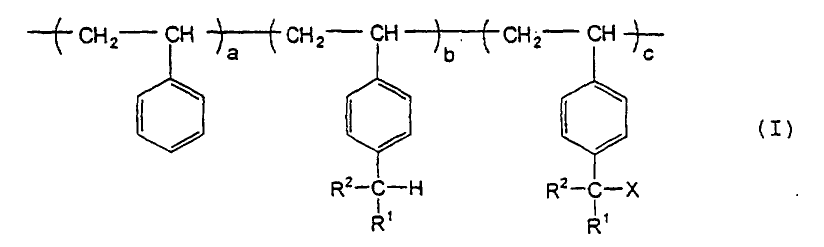 wherein R¹ and R² are independently selected from the group consisting of hydrogen, alkyl, primary and secondary haloalkyl. Preferably, R¹ and R² are independently selected from the group consisting of hydrogen, C₁ to C₅ alkyl, and C₁ to C₅ primary and secondary haloalkyl.

X is a functional group selected from a group containing halogen, oxygen, sulfur, silicon, nitrogen, carbon, phosphorus, and mixtures thereof.

a ranges from 10 to 30000, b ranges from 0 to 30000, and c ranges from 1 to 30000.

Preferably, the copolymer has a number average molecular weight of at least 1000.

The general process for preparing the functionalized syndiotactic styrene/para-alkylstyrene copolymer of the present invention will be described below.

We take the reaction of styrene and para-methylstyrene monomers as an example. First, the two monomers are copolymerized by using a metallocene as a catalyst. The catalyst system may also include an activating cocatalyst such as methyl aluminoxane (MAO). 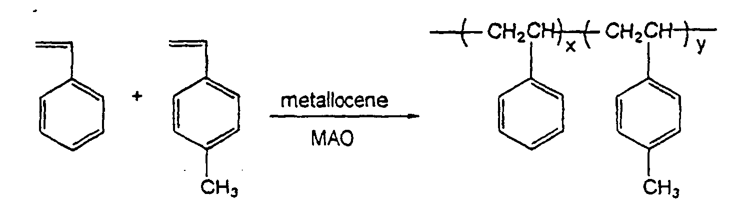 wherein x and y are the molar ratio of the respective monomer, and x+y=100.

Suitable metallocene catalysts have a delocalized π-bonded moiety with a constrained geometry. The catalysts may be further described as a metal coordination complex comprising a metal of Groups IVB-VIB of the Periodic Table of the elements and a delocalized π-bonded moiety with a constrained geometry. Some of them have been taught in U.S. Pat. Nos. 4,542,199; 4,530,914; 4,665,047; 4,752,597; 5,026,798; and 5,272,236. Preferred catalyst complexes include zirconocene and titanocene coordination compounds with single or double cyclopentadienyl derivatives which form the constrained ligand geometry.

The activating cocatalyst can be methyl aluminoxane (MAO), a trialkyl aluminum, a dialkyl aluminum, a salt of an inert and non-coordinating anion, or a mixture thereof.

The trialkyl aluminum can be selected from the group consisting of trimethyl aluminum, triethyl aluminum, tripropyl aluminum, trisopropyl aluminum, tributyl aluminum, and triisobutyl aluminum (TIBA).

The inert and non-coordinating anion can be a borate. Borates that are suitable for use in the present invention include N,N-dimethyl anilinium tetrakis(pentafluorophenyl)borate, triphenyl carbenium tetrakis(pentafluorophenyl)borate, trimethyl ammonium tetrakis(pentafluorophenyl)borate, ferrocenium tetrakis(pentafluorophenyl)borate, dimethyl ferrocenium tetrakis(pentafluorophenyl)borate, and silver tetrakis(pentafluorophenyl)borate.

Preferably, the activating cocatalyst is methyl aluminoxane, or a mixture of a trialkyl aluminum and a borate.

Suitable diluents for the monomers and catalyst components include the general group of aliphatic and aromatic hydrocarbons, used singly or in a mixture, such as propane, butane, pentane, cyclopentane, hexane, toluene, heptane, isooctane, etc.

In general, the polymerization reaction of the present invention is carried out by mixing styrene and p-methylstyrene in the presence of the catalyst in a copolymerization reactor, with thorough mixing at a temperature between 0°C to 100°C. The polymerization is carried out in an inert gas atmosphere and the substantial absence of moisture.

The advantage of the styrene/p-methylstyrene copolymer is that the benzylic protons in p-methylstyrene unit can be easily converted to various functional groups, such as -COOH, -OH, -NH₂, -Cl, -Br, -M, COOM (M=metal, e.g. Li, Na, K and Ca), under mild reaction conditions. Most functionalization reactions of benzylic protons in organic compounds can be applied to those of benzylic protons in p-methylstyrene.

The following equations, involving (but not limited to) bromination and carboxylation reactions of the syndiotactic styrene/p-methylstyrene copolymer are used to illustrate the functionalization reactions of benzylic protons in the syndiotactic styrene/p-methylstyrene copolymer.

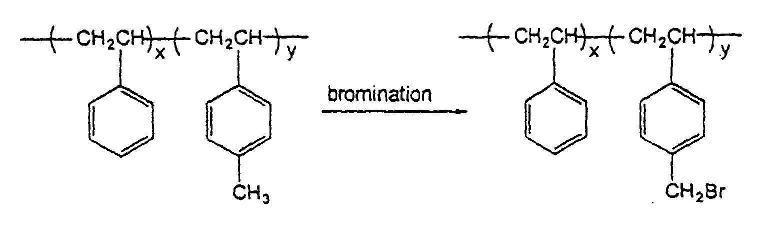

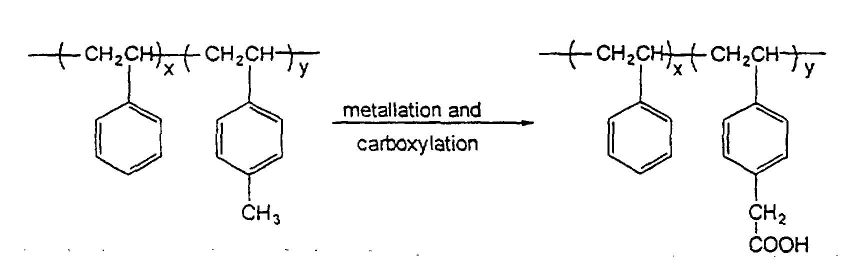

Among the functionalizations of the benzylic protons in the syndiotactic styrene/p-alkylstyrene copolymer, halogenation and metallation are the most important. The halogenation reaction results in a benzylic halogen, which constitutes a very active electrophile that can be converted to various functionalities via nucleophilic substitution reactions. The metallation reaction results in a benzylic anion in the p-alkylstyrene unit, which can be converted to many other functionalities. In fact, the halogenated and metallated syndiotactic styrene/p-alkylstyrene copolymer significantly broaden the scope of achievable functional groups to include almost all the desirable organic functional groups.

Therefore, via the direct reaction of the unfunctionalized syndiotactic styrene/p-alkylstyrene, or via the reaction of the halogenated or metallated syndiotactic styrene/p-alkylstyrene, the functional group X on formula (I) may be a group containing halogen, metal, oxygen, sulfur, silicon, nitrogen, carbon, phosphorus, or combinations thereof. The functional group X on the benzylic position has been taught in U.S. Patent Nos. 5,543,484 (Chung, et al.); 5,548,029 (Powers et al.); and 5,162,445 (Powers, et al.)

Representative examples of the functional group X containing a metal include alkali and alkaline earth metals.

Examples of the functional group X containing oxygen, which results in attachment of -O- to the benzylic position from which the halide ion is displaced, include alkoxides, phenoxides and carboxylates.

Examples of the functional group X containing sulfur which results in attachment of -S- to the benzylic position from which the halide ion is displaced include thiolates, thiophenolates, thioethers, thiocarboxylates, dithiocarboxylates, thioureas, dithiocarbamates, xanthates and thiocyanates.

Examples of the functional group X containing silicon which results in attachment of -Si- to the benzylic position from which the halide ion is displaced include silanes and halosilanes.

Examples of the functional group X containing carbon which results in attachment of -C- to the benzylic position from which the halide ion is displaced include malonates, cyanides, and CR³₃, wherein each R³ is an organic radical.

Examples of the functional group X containing nitrogen which results in attachment of -N- to the benzylic position from which the halide ion is displaced include amides, amines, carbazoles, phthalimides, pyridine, maleimide and cyanates.

Examples of the functional group X containing phosphorus which results in attachment of -P- to the benzylic position from which the halide ion is displaced include phosphines.

### Synthesis of Syndiotactic Poly(styrene-co-p-alkylstyrene)

### Example 1: Synthesis of syndiotactic poly(styrene-co-p-methylstyrene)

35 mL of the purified para-methylstyrene monomer (hereinafter referred to as "pMS") and 315 mL of the purified styrene monomer (hereinafter referred to as "SM") were charged in 1 L metal reaction vessel under nitrogen. Then, 2.8 mL of 10 wt% methyl aluminoxane (MAO) was charged in the reaction vessel. The reaction vessel was heated to 70°C, then, 0.0208 mmol of pentamethylcyclopentadienyl dimethoxy titanium (III) [Cp*Ti(OMe)₂] was added. The reaction proceeded for 60 minutes and was terminated by adding a sodium hydroxide/methanol solution. The copolymer was isolated by the Soxhlet extraction method with methanol for 24 hours. The product was 86 g. The composition, melting point, and molecular weight of the copolymer were determined by ¹H NMR, differential scanning calorimetry (DSC), and gel permeation chromatography (GPC), respectively. The copolymer contained about 12 mol% of pMS. The melting point was 239°C. GPC results indicated a weight average molecular weight (Mw) of 1,526,000, a number average molecular weight (Mn) of 741,000, and a molecular weight distribution of 2.06. The other properties of the resulting copolymer are set forth in Table 1.

### Example 2

The procedures as described in Example 1 were employed except that the amounts of the catalyst and MAO added were changed. The results are shown in Table 1.

### Example 3

The procedures as described in Example 1 were employed except that the pentamethylcyclopentadienyl dimethoxy titanium (III) [Cp*Ti(OMe)₂] catalyst was replaced by the catalyst system used in U.S. Patent No. 5,644,009. The results are shown in Table 1.

### Examples 4-6

The procedures as described in Example 3 were employed except that the reaction was conducted in a 1 L glass reaction vessel, and a hydrogen gas with a pressure of 0.1 kg/cm²G was introduced into the vessel. The results are shown in Table 1.

### Example 7

The procedures as described in Example 1 were employed except that the reaction was conducted in a 100 L reaction vessel, and the amount of the reactants was changed. The results are shown in Table 1.

### Example 8

The procedures as described in Example 1 were employed except that a hydrogen gas with a pressure of 0.4 kg/cm²G was introduced into the vessel. The results are shown in Table 1.

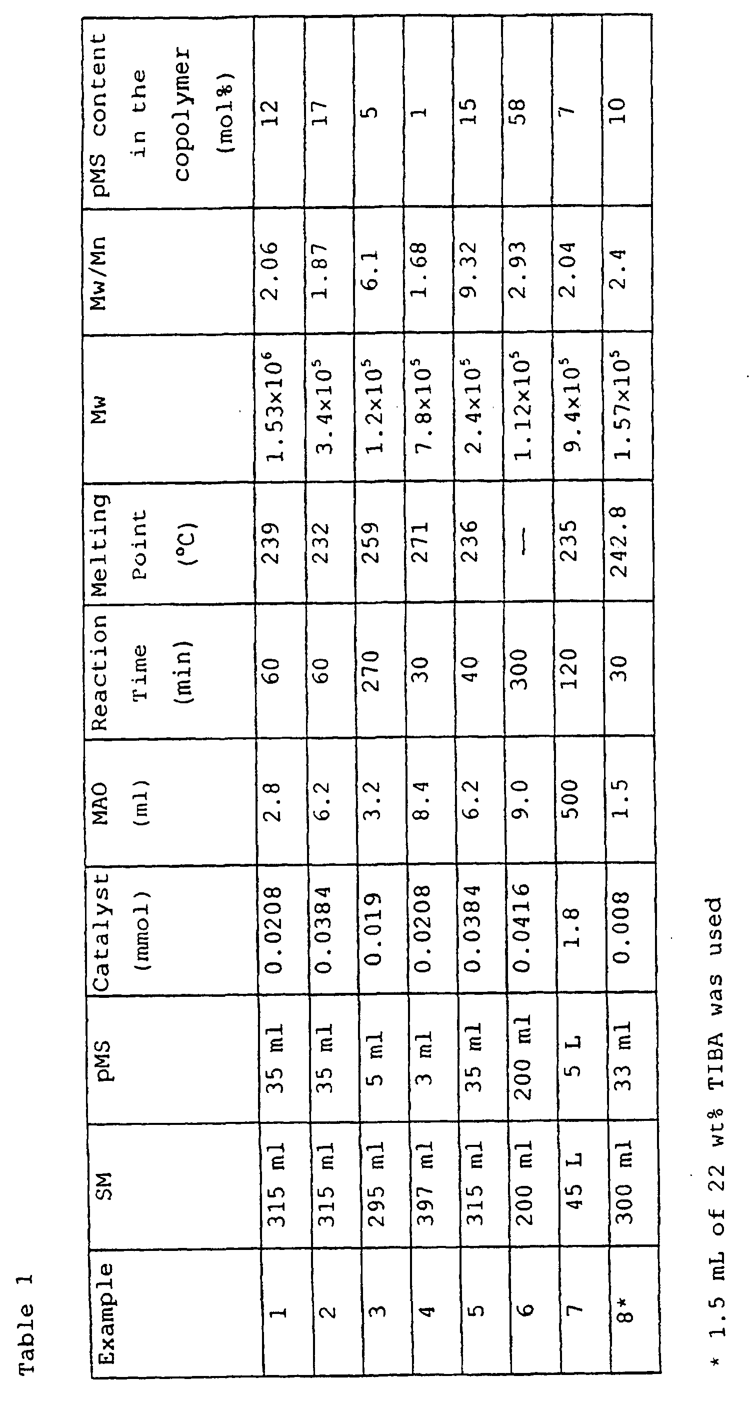

### Functionalization of Syndiotactic Poly(styrene-co-p-alkystyrene)

### Example 9: Oxidation of syndiotactic poly(styrene-co-p-methylstyrene) (sPS-pMS)

20 g of the syndiotactic poly(styrene-co-p-methylstyrene) (sPS-pMS) obtained from Example 2 was dissolved in 600 mL of o-dichlorobenzene (ODCB) under an oil bath at 120°C. 300 mL of acetic acid was gradually added into the solution and the reaction mixture was cooled to about 100°C. After that, 20 mole% of cobalt (III) acetate tetrahydrate and 60 mole% of sodium bromide, based on the pMS content of sPS-pMS, were added, and oxygen was bubbled through at a rate of 1 L/min for 2 hours. After cooling, the reaction was terminated with methanol, filtered, washed with a hot water/methanol mixture twice, washed with methanol twice, and extracted with methanol by the Soxhlet extraction method for 20 hours. Both -CHO and -COOH groups were observed by ¹H NMR spectrum. The results are shown in Table 2. Total oxidation indicates the mole% of the oxidized functional group based on the moles of the original polymer (sPS-pMS). PDI refers to the polydispersity index.

### Examples 10 and 11

The same procedures described in Example 9 were employed, except that the amounts of the catalyst and sodium bromide added were changed, and the reaction time was changed. The results are shown in Table 2.

### Examples 12 and 13

The same procedures described in Example 9 were employed except that 20 g of syndiotatic poly(styrene-co-p-methylstyrene) obtained from Example 7 was used, and the reaction time was changed to control molecular weight. The results are shown in Table 2.

**Table 2**

| Example | Reaction Time | Co:NaBr (mole % of pMS) | Total oxidation (%) | Mn | PDI | Tm (°C) | Tg (°C) |
|---|---|---|---|---|---|---|---|
| 9 | 2 hr | 20:60 | 9.27 | 16000 | 2.29 | 185.28 | 98.74 |
| 10 | 1hr50m | 10:40 | 3.61 | 45000 | 2.28 | 225.82 | 96.92 |
| 11 | 1.5 hr | 10:40 | 3.32 | 58000 | 1.98 | 223.45 | 95.26 |
| 12 | 3.0 hr | 20:40 | 6.20 | 43000 | 1.76 | 228.0 | 93.67 |
| 13 | 1.5 hr | 20:40 | 6.15 | 289000 | 2.32 | 235.5 | 93.22 |

### Example 14: Bromination of syndiotactic poly(styrene-co-p-methylstyrene)

35.9 g of syndiotactic poly(styrene-co-p-methylstyrene) obtained from Example 6 was charged in a round bottom flask that was wrapped with aluminum foil. 450 mL of CCl₄, 49.6 g of N-bromosuccinimide (NBS), and 1.7 g of benzoyl peroxide (BPO) were added, then the mixture was refluxed in an oil bath under nitrogen for 43 hours. The polymer solution was precipitated by isopropanol, and then washed with water and isopropanol. The brominated polymer was dried under vacuum at 60°C and 49.3 g was obtained. From ¹H NMR spectrum, it was observed that 75 % of the chemical shift of para-CH₃ was converted to 4.4 ppm, the chemical shift of -CH₂Br.

### Example 15: Bromination of syndiotactic poly(styrene-co-p-methylstyrene)

2.5 g of syndiotactic poly(styrene-co-p-methylstyrene) obtained from Example 2 was dissolved with 200 mL of C₆H₅Cl in an oil bath at 120°C to ensure complete dissolution. The solution was cooled to 75°C, and 1 mL of 10 % bromine in C₆H₅Cl under dark was added dropwise to the round bottom flask charged with the polymer solution, and the flask was illuminated by a 90 W light bulb simultaneously. The bromine solution was added over a period of 20 minutes, and the bromine added was equal to 50% of the content of the para-CH₃. Subsequently, the polymer solution was precipitated by methanol, and then washed with water and methanol. The brominated polymer was dried under vacuum at 60°C and 2.58 g was obtained. From the ¹H NMR spectrum, it was observed that about 43% of the chemical shift of the para-CH₃ was converted to 4.4 ppm, the chemical shift of -CH₂Br.

### Example 16: Carboxylation of syndiotactic poly(styrene-co-p-methylstyrene)

3 g of dried syndiotactic poly(styrene-co-p-methylstyrene) obtained from Example 6 was added in 100 mL of purified and dried cyclohexane under nitrogen at 60°C for dissolution. The polymer solution was cooled to 0°C, and a brownish red solution of 10.4 mL of s-BuLi (1.3 M) and 4.1 mL of tetramethylethylenediamine (TMEDA) was added. The reaction was conducted at 60°C for 3 hours, and then cooled to room temperature. 150 mL of THF saturated by CO₂ was added, and the bubbling of CO₂ through the reaction mixture was continued for 1.5 hour for carboxylation. The reaction was terminated by methanol, and the carboxylated polymer was precipitated by methanol. The resulting polymer was re-dissolved with THF, precipitated by IPA (isopropyl alcohol) and then dried. FT-IR spectrum shows strong absorption of carboxyl group (C=O) at 1718 cm⁻¹. From the DSC curve, it was found that the glass transition temperature (Tg) was increased by 5.5°C.

### Example 17: Silylation of syndiotactic poly(styrene-co-p-methylstyrene)

0.5 g of the carboxylated polymer obtained from Example 15 was dissolved with 50 mL of THF. Then, 1 mL of (CH₃)₃SiCl and 0.5 mL of Et₃N were added, and stirred under heating for 30 minutes. The reaction solution was precipitated by methanol. The polymer was isolated by filtering, washing with methanol, and drying. From the ¹H NMR spectrum, the chemical shift of the -Si(CH₃)₃ at 0.09 ppm was observed.

The foregoing description of the preferred embodiments of this invention has been presented for purposes of illustration and description. Obvious modifications or variations are possible in light of the above teaching. The embodiments were chosen and described to provide the best illustration of the principles of this invention and its practical application, thereby enabling those skilled in the art to utilize the invention in various embodiments and with various modifications as suited to the particular use contemplated. All such modifications and variations are within the scope of the present invention as determined by the appended claims when interpreted in accordance with the breadth to which they are fairly, legally, and equitably entitled.

## Claims

1. A functionalized syndiotactic styrene/para-alkylstyrene copolymer, having the formula of 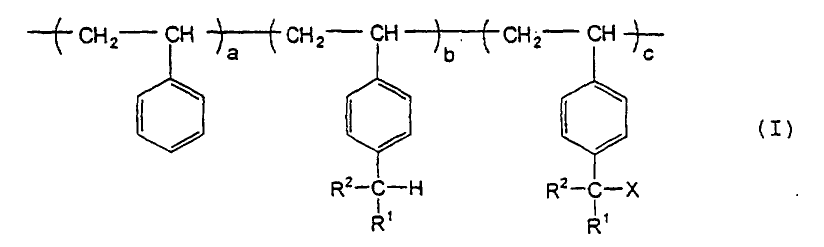 wherein
R¹ and R² are independently selected from the group consisting of hydrogen, alkyl, primary and secondary haloalkyl,
X is a functional group is selected from the group consisting of a functional group containing halogen, metal, oxygen, sulfur, silicon, nitrogen, carbon, phosphorus, and mixtures thereof,
a ranges from 10 to 30000,
b ranges from 0 to 30000, and
c ranges from 1 to 30000.

2. The functionalized copolymer as claimed in claim 1, wherein X is a halogen.

3. The functionalized copolymer as claimed in claim 1, wherein X is an alkali or alkaline earth metal.

4. The functionalized copolymer as claimed in claim 1, wherein X is selected from the group consisting of alkoxides, phenoxides and carboxylates.

5. The functionalized copolymer as claimed in claim 1, wherein X is selected from the group consisting of thiolates, thiophenolates, thioethers, thiocarboxylates, dithiocarboxylates, thioureas, dithiocarbamates, xanthates and thiocyanates.

6. The functionalized copolymer as claimed in claim 1, wherein X is selected from the group consisting of silanes and halosilanes.

7. The functionalized copolymer as claimed in claim 1, wherein X is selected from the group consisting of malonates, cyanides, and CR³₃, wherein each R³ is an organic radical.

8. The functionalized copolymer as claimed in claim 1, wherein X is selected from the group consisting of amides, amines, carbazoles, phthalimides, pyridines, maleimides and cyanates.

9. The functionalized copolymer as claimed in claim 1, wherein X is a phosphine.

10. The functionalized copolymer as claimed in claim 1, wherein R¹ and R² are independently selected from the group consisting of hydrogen, C₁ to C₅ alkyl, and C₁ to C₅ primary and secondary haloalkyl.

11. The functionalized copolymer as claimed in claim 1, which is obtained from polymerization in the presence of a metallocene as a catalyst.

12. The functionalized copolymer as claimed in claim 1, wherein said copolymer has a number average molecular weight of at least 1000.

## Patentansprüche

1. Funktionalisiertes syndiotaktisches Styren/para-Alkylstyren-Copolymer mit der Formel: 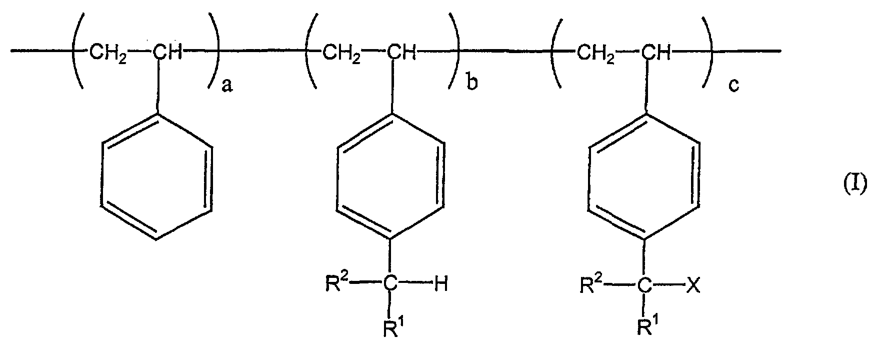 worin
R¹ und R² unabhängig voneinander aus der Gruppe ausgewählt sind, die aus Wasserstoff, Alkyl, primärem und sekundärem Halogenalkyl besteht,
X eine funktionelle Gruppe ist, die aus der Gruppe ausgewählt ist, die aus einer funktionellen Gruppe besteht, die Halogen, Metall, Sauerstoff, Schwefel, Silizium, Stickstoff, Kohlenstoff, Phosphor und Gemische davon enthält,
a zwischen 10 und 30.000,
b zwischen 0 und 30.000 und
c zwischen 1 und 30.000 liegt.

2. Das funktionalisierte Copolymer nach Anspruch 1, wobei X ein Halogen ist.

3. Das funktionalisierte Copolymer nach Anspruch 1, wobei X ein Alkali- oder Erdalkalimetall ist.

4. Das funktionalisierte Copolymer nach Anspruch 1, wobei X aus der Gruppe ausgewählt ist, die aus Alkoxiden, Phenoxiden und Carboxylaten besteht.

5. Das funktionalisierte Copolymer nach Anspruch 1, wobei X aus der Gruppe ausgewählt ist, die aus Thiolaten, Thiophenolaten, Thioethern, Thiocarboxylaten, Dithiocarboxylaten, Thioharnstoffen, Dithiocarbamaten, Xanthaten und Thiocyanaten besteht.

6. Das funktionalisierte Copolymer nach Anspruch 1, wobei X aus der Gruppe ausgewählt ist, die aus Silanen und Halogensilanen besteht.

7. Das funktionalisierte Copolymer nach Anspruch 1, wobei X aus der Gruppe ausgewählt ist, die aus Malonaten, Cyaniden und CR³₃, worin jedes R³ ein organisches Radikal ist, besteht.

8. Das funktionalisierte Copolymer nach Anspruch 1, wobei X aus der Gruppe ausgewählt ist, die aus Amiden, Aminen, Carbazolen, Phthalimiden, Pyridinen, Maleimiden und Cyanaten besteht.

9. Das funktionalisierte Copolymer nach Anspruch 1, wobei X ein Phosphin ist.

10. Das funktionalisierte Copolymer nach Anspruch 1, wobei R¹ und R² unabhängig voneinander aus der Gruppe ausgewählt sind, die aus Wasserstoff, C₁- bis C₅-Alkyl und primärem und sekundärem C₁- bis C₅-Halogenalkyl besteht.

11. Das funktionalisierte Copolymer nach Anspruch 1, wobei es durch Polymerisation in Gegenwart eines Metallocens als Katalysator erhalten wird.

12. Das funktionalisierte Copolymer nach Anspruch 1, wobei besagtes Copolymer ein zahlenmittleres Molekulargewicht von zumindest 1000 besitzt.

## Revendications

1. Copolymère de styrène/para-alkylstyrène syndiotactique fonctionnalisé ayant la formule 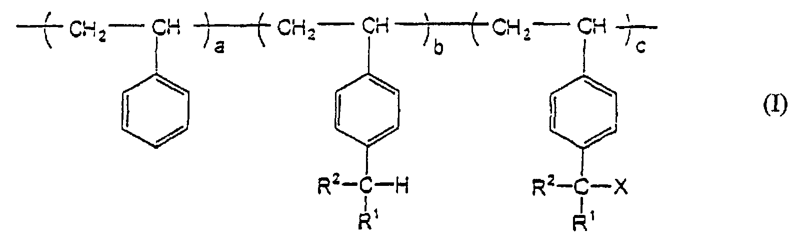 dans laquelle
R¹ et R² sont choisis indépendamment dans le groupe constitué par l'hydrogène, les groupes alkyle et les groupes halogénoalkyle primaires et secondaires,
X est un groupe fonctionnel choisi dans le groupe constitué par des groupes fonctionnels contenant un halogène, un métal, de l'oxygène, du soufre, du silicium, de l'azote, du carbone, du phosphore et leurs mélanges,
a est compris entre 10 et 30 000,
b est compris entre 0 et 30 000, et
c est compris entre 1 et 30 000.

2. Copolymère fonctionnalisé selon la revendication 1, dans lequel X est un halogène.

3. Copolymère fonctionnalisé selon la revendication 1, dans lequel X est un métal alcalin ou un métal alcalino-terreux.

4. Copolymère fonctionnalisé selon la revendication 1, dans lequel X est choisi dans le groupe constitué par des alkylates, des phénylates et des carboxylates.

5. Copolymère fonctionnalisé selon la revendication 1, dans lequel X est choisi dans le groupe constitué par des thiolates, des thiophénolates, des thioéthers, des thiocarboxylates, des dithiocarboxylates, des thiourées, des dithiocarbamates, des xanthates et des thiocyanates.

6. Copolymère fonctionnalisé selon la revendication 1, dans lequel X est choisi dans le groupe constitué par des silanes et des halogénosilanes.

7. Copolymère fonctionnalisé selon la revendication 1, dans lequel X est choisi dans le groupe constitué par des malonates, des cyanures et CR³₃, dans lequel chacun des R³ est un radical organique.

8. Copolymère fonctionnalisé selon la revendication 1, dans lequel X est choisi dans le groupe constitué par des amides, des amines, des carbazoles, des phtalimides, des pyridines, des maléimides et des cyanates.

9. Copolymère fonctionnalisé selon la revendication 1, dans lequel X est une phosphine.

10. Copolymère fonctionnalisé selon la revendication 1, dans lequel R¹ et R² sont choisis indépendamment dans le groupe constitué par l'hydrogène, des groupes alkyle en C₁-C₅ et des groupes halogénoalkyle primaires et secondaires en C₁-C₅.

11. Copolymère fonctionnalisé selon la revendication 1, qui est obtenu par polymérisation en présence d'un métallocène comme catalyseur.

12. Copolymère fonctionnalisé selon la revendication 1, ledit copolymère ayant une masse molaire moyenne en nombre d'au moins 1 000.
